# EUROPÄISCHE PATENTSCHRIFT

(11) **EP 3 792 451 B1**
(45) Veröffentlichungstag und Bekanntmachung des Hinweises auf die Patenterteilung: **19.06.2024**
(21) Anmeldenummer: 20195154.8
(22) Anmeldetag: 08.09.2020
(51) Int. Cl.: F01D 5/14, F01D 9/04

(54) **VERDICHTERSTUFE MIT VARIABLER STATORSCHAUFELNEIGUNG**
COMPRESSOR STAGE WITH VARIABLE STATOR BLADE TILT
ÉTAGE DE COMPRESSEUR À INCLINAISON VARIABLE DES PALES DE STATOR

(30) Priorität: 12.09.2019 DE 102019213932
(43) Veröffentlichungstag der Anmeldung: 17.03.2021
(73) Patentinhaber: Deutsches Zentrum für Luft- und Raumfahrt e.V., 51147 Köln (DE)
(72) Erfinder: Jaron, Robert, 12353 Berlin (DE)
(74) Vertreter: Patentanwälte Bressel und Partner mbB

(56) Entgegenhaltungen:
- EP-A1- 1 333 181
- EP-A1- 3 530 880
- EP-A2- 1 939 399
- US-A1- 2005 008 494
- US-A1- 2006 210 395
- US-A1- 2006 222 488
- US-A1- 2012 243 983
- US-B1- 6 195 983
- US-B1- 6 554 564
- ENVIA E ET AL: "Design selection and analysis of a swept and leaned stator concept", JOURNAL OF SOUND AND VIBRATION, ELSEVIER, AMSTERDAM, NL, Bd. 228, Nr. 4, 9. Dezember 1999 (1999-12-09), Seiten 793-836, XP002517872, ISSN: 0022-460X, DOI: 10.1006/JSVI.1999.2441 [gefunden am 2002-03-27]

## Beschreibung

Die Erfindung betrifft eine Verdichterstufe mit variabel geneigten Statorschaufeln. Insbesondere kann es sich um eine Verdichterstufe eines Nebenstromtriebwerks handeln, insbesondere für Luftfahrzeuge und ferner insbesondere für die zivile Luftfahrt und/oder für Flüge mit Unterschallgeschwindigkeit. Die Erfindung betrifft auch ein Strahltriebwerk mit einer solchen Verdichterstufe.

Verdichterstufen (auch als Gebläse oder Ventilator bezeichnet) zur Verdichtung und/oder Beschleunigung von Gasen oder Gasgemischen sind aus dem Stand der Technik bekannt. Sie umfassen allgemein einen Rotor (vorliegend als Fan bezeichnet) und einen stehenden Stator (vorliegend umfassend Statorschaufeln und bevorzugt auch ein Außengehäuse und eine Statornabe). Zumeist sind Verdichterstufen von einem ringförmigen Kanal umgeben. Die Statoren überspannen meist die gesamte radiale Höhe des Kanals oder, anders ausgedrückt, verbinden jeweils ein radial inneres Gehäuse (auch als Statornabe bezeichnet) des Stators mit einem radial äußeren Außengehäuse der Verdichterstufe bzw. des Stators.

Der Rotor umfasst in der Regel Schaufeln (zum Beispiel Fanschaufeln), welche bei einer Rotation ein umgebendes Gas oder Gasgemisch einsaugen und verdichten. Die daraus resultierende Strömung wird dann durch den Stator und insbesondere entlang dessen Statorschaufeln geleitet.

Mögliche Anwendungsbeispiele von Verdichterstufen sind Triebwerke ziviler und militärischer Luftfahrzeuge. Hierbei handelt es sich um Gasturbinen und genauer gesagt um Strahltriebwerke. Bei Triebwerken ohne Nebenstromkanal folgt der Stator meist direkt dem Rotor und erstreckt sich bevorzugt über die gesamte Kanalhöhe. Die eingesaugte Strömung durchläuft anschließend bekanntermaßen das sogenannte Kerntriebwerk, bestehend aus einem Verdichter, einer Brennkammer, einer Turbine und einem Düsenabschnitt. Bei Triebwerken mit Nebenstromkanal wird die eingesaugte Umgebungsluft stromäbwärts des Fans meist mittels eines ringförmigen sogenannten Splitters in einen radial äußeren Nebenstrom, der durch einen Nebenstromkanal (auch als Bypasskanal bezeichnet) geleitet wird, und in einen radial inneren Kernstrom geteilt, der das Kerntriebwerk durchströmt. Der Nebenstrom wird in der Regel erst im Austrittsbereich des Triebwerkes wieder mit dem Kernstrom zusammengeführt.

Weitere Anwendungsbeispiele sind Fanstufen die zur Vortriebsgenerierung von Flugzeugen verwendet werden, im Gegensatz zu den konventionellen Gasturbinen aber extern durch einen Verbrennungs- und/oder Elektromotor angetrieben werden. Dem sich drehenden Rotor und dem stehenden Stator folgt in diesem Anwendungsfall direkt eine Düse, aus der die angesaugte Strömung wieder austritt.

Auch Gebläsestufen, die zur Be- und Entlüftung oder zum Transport von gasförmigen Fluiden genutzt werden, sind mögliche Anwendungsfälle der Erfindung, z.B. bei Lüftern.

In an sich bekannter Weise wird das gasförmige Fluid über eine Verdichterstufe eingesaugt und durchströmt die Verdichterstufe entlang einer Strömungsachse (z.B. von einem entgegen der Strömungsrichtung betrachtet vorderen Einlassbereich nahe des Fans zu einem rückseitigen Austrittsbereich, der insbesondere stromabwärts des Stators liegt). Hierin getätigte Bezugnahmen auf eine stromabwärts- oder -aufwärtspositionierung können sich auf diese Strömungsachse und insbesondere diese Strömungsrichtung beziehen.

Der Rotor saugt das Fluid aus stromaufwärts der Verdichterstufe liegend Umgebungsbereichen ein und beschleunigt dieses. Hinter dem Rotor hat die Strömung für gewöhnlich eine Geschwindigkeitskomponente in Umfangsrichtung des Strömungskanals. In geringer Nähe hinter dem Rotor befindet sich typischerweise der Stator mit einer Mehrzahl stehender Schaufeln. Diese sind in der Regel gleichmäßig in Umfangsrichtung verteilt, können aber auch ungleichmäßig verteilt sein. Der Stator hat die Aufgabe den ungewünschten Strömungsdrall so umzulenken, dass ein größerer Anteil der Strömungsgeschwindigkeit in Richtung der Strömungsachse weist und damit zur Wirkungsgraderhöhung der Verdichterstufe beitragen kann. Aufgrund der über die Kanalhöhe variierenden Strömungsgeschwindigkeit in Achs- und Umfangsrichtung weisen die Statorschaufeln für gewöhnlich eine Verdrehung bzw. Torsion entlang ihrer Höhe bzw. Längsachse auf. Des Weiteren können die Statorschaufeln in Strömungsrichtung gepfeilt sein (also sozusagen schräg nach hinten bzw. vorne verlaufen, sh. nachstehender "sweep"-angle).

Auch Statorschaufeln gemäß der Erfindung können (insbesondere unabhängig von einem Einsatz in einem Nebenstromtriebwerk oder allgemein in einem Triebwerk) gemäß sämtlicher vorstehender Varianten ausgebildet sein, weisen jedoch die nachstehend erläuterten erfindungsgemäßen Besonderheiten auf.

Es ist bekannt, dass die Interaktion der Strömungsinhomoginitäten, die durch die Umströmung der Rotorschaufeln hervorgerufen werden, mit den Statorschaufeln zu unerwünschten Schallentwicklungen führt. Insbesondere führt die Interaktion der Rotornachläufe mit den Statoren zu einem sogenannten tonalen Interaktionslärm. Neben einem rein radialen Verlauf der Statorschaufeln ist es zum Reduzieren dieses tonalen Interaktionslärms bereits bekannt, die Statorschaufeln gegenüber einer radialen Achse zu neigen. Geeignete Definitionen dieses Winkels werden nachstehend noch erläutert. Der Neigungswinkel ist bisher meist konstant entlang der Länge der Statorschaufeln, welche sich geradlinig geneigt zwischen Statornabe und Außengehäuse erstrecken.

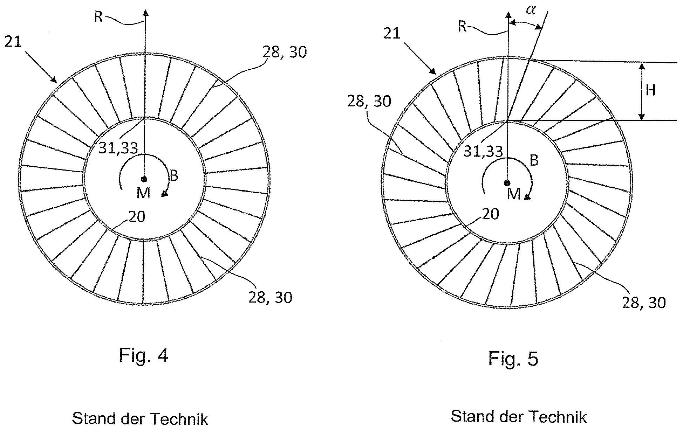

Ursache der schallmindernden Wirkung einer solchen Neigung ist das Erhöhen des Phasenversatzes zwischen den Rotornachläufen und den Schaufelvorderkanten des Stators. Hierdurch wird die Anzahl an Phasenwechseln der resultierenden Dipolquellen auf der Statorvorderkante erhöht, was tendenziell zu vermehrten destruktiven Interferenzen bei der akustischen Abstrahlung der Dipolquellen von den Statorschaufeln in den Strömungskanal führt und sich anschließend als Schallwellen stromauf und stromab der Statorschaufeln ausbreitet. Infolge dessen reduziert sich auch die abgestrahlte Schallleistung. Beispiele derartiger vorbekannter Lösungen werden nachstehend anhand der beigefügten Figuren 4 und 5 erläutert.

Zudem wird die Amplitude der Strömungsanregung normal zur Vorderkante der Statorschaufeln durch die Neigung reduziert, was sich ebenfalls schallmindernd auswirkt.

Allgemein hat sich gezeigt, dass das Neigen der Statorschaufeln zwar schallmindernd ist, nachteiligerweise aber mit einer Verminderung des Wirkungsgrades einhergehen kann. Ursächlich hierfür ist zum Beispiel die gegenüber rein radial ausgerichteten Statorschaufeln vergrößerte Oberfläche und Länge der geneigten Statorschaufeln, was mit größeren Reibungsverlusten einhergehen kann.

Neben den anhand der nachstehenden Figuren 4 und 5 diskutierten vorbekannten Lösungen ist ein Ausgangspunkt der vorliegenden Erfindung die EP 2 075 413 A1. Dort sind Statorschaufeln mit Neigungswinkel offenbart. Die WO 2016/148692 A1 offenbart Statorschaufeln mit nahe eines Außengehäuses radial weiter einwärts liegenden Bereichen.

Weiterer technologischer Hintergrund findet sich in folgenden Druckschriften:
EP 3 453 835 A1, DE 60 2004 000 160 T2, EP 2 706 240 A2, WO 2012/134937 A1, US 2017/0114796 A1 und EP 1 939 399 A2.

Die US 2005/0008494 A1 offenbart Statorschaufeln mit einem geneigten radial äußeren Abschnitt. Die US 2006/0210395 A1 offenbart eine Statorschaufel mit einer zur Schallminderung angepassten Formgebung.

Die EP 1 939 399 A2 betrifft eine Turbinenbaugruppe, umfassend mindestens eine Statorbaugruppe, die ein radial inneres Band und mindestens eine Statorschaufel umfasst, die sich von dem inneren Band radial nach außen erstreckt, wobei die Statorschaufel ein Schaufelblatt umfasst, wobei das Schaufelblatt ferner mindestens eine Richtungsänderung umfasst.

Die US 6 195 983 B1 betrifft eine Gasturbinentriebwerks-Fan-Baugruppe mit einer Vielzahl von axial gekrümmten Fan-Austrittsleitschaufeln.

Aufgabe der vorliegenden Erfindung ist es daher, die abgestrahlte Schalleistung einer Verdichterstufe bei begrenzter oder sogar ausbleibender Auswirkung auf den Wirkungsgrad zu verringern. Diese Aufgabe wird durch die Gegenstände gemäß den beigefügten unabhängigen Ansprüchen gelöst. Vorteilhafte Weiterbildungen sind in den abhängigen Ansprüchen angegeben. Ferner versteht es sich, dass die in der einleitenden Beschreibung erwähnten Merkmale und Erläuterungen einzeln oder in beliebiger Kombination auch bei der vorliegend offenbarten Lösung vorgesehen sein bzw. auf diese zutreffen können, sofern nicht anders angegeben oder ersichtlich.

Erfindungsgemäß wurde erkannt, dass ursächlich für Wirkungsgradverluste zum Beispiel die gegenüber rein radial ausgerichteten Statorschaufeln vergrößerte Oberfläche und Länge der bisherigen geneigten Statorschaufeln ist, was mit größeren Reibungsverlusten einhergehen kann. Durch die Neigung der Statorschaufeln nahe der Statornabe können außerdem Druckgradienten auftreten, die unerwünschte Umlenkungen der Strömung innerhalb der geschilderten Kanäle zur Folge haben und möglicherweise zu einer Minderung des Wirkungsgrades führen. Dieser Effekt ist bekannt und z.B. bei Grieb "Verdichter für Turbo-Flugtriebwerke", Springer Verlag, 2009, ISBN 978-3-540-34374-5 erwähnt. Er wird jedoch bisher nicht ausreichend praktisch berücksichtigt und kompensiert. Weiter ist es auch nicht möglich, aufgrund fertigungstechnischer und/oder fertigungswirtschaftlicher Begrenzungen und/oder der mechanischen Stabilität die Statorschaufeln beliebig stark zu neigen.

Die Erfindung sieht daher vor, als einen zusätzlichen Freiheitsgrad, mit dem eine Schallminderung erreicht werden kann, aber auch die vorstehenden Nachteile und insbesondere Wirkungsgradminderungen zumindest teilweise begrenzt werden können, den Neigungswinkel variabel zu gestalten. Insbesondere kann dieser entlang einer (radialen) Höhe der Statorschaufeln und/oder Länge von deren Vorderkanten variabel gestaltet werden. Hierdurch wird ermöglicht, die Form und insbesondere Neigung der Statorschaufeln je nach den lokalen bzw. örtlichen Verhältnissen geeignet anzupassen.

Insbesondere wird hierdurch die Möglichkeit geschaffen, in radial außen liegenden Bereichen (zum Beispiel nahe zu dem Außengehäuse) größere Neigungen als in radial innen liegenden Bereichen (zum Beispiel nahe der Statornabe) vorzusehen.

Es wurde erkannt, dass sich hierdurch besonders starke schallmindernde Wirkungen einstellen, da in radial äußeren Bereichen typischerweise Strömungsverhältnisse (insbesondere Geschwindigkeitsprofile und Amplituden) vorliegen, die eine Schallentwicklung besonders begünstigen.

Insbesondere wurde erkannt, dass hierdurch auch die Möglichkeit geschaffen wird, Statorschaufeln nahe der Statornabe nicht oder nur gering zu neigen, sodass vorstehend erläuterte Druckgradienten abgeschwächt werden.

Insbesondere eine Kombination aus geringer oder keiner Neigung nahe der Statornabe, bevorzugt aber deutlich höherer (z.B. wenigstens 40°) Neigung in radial äußeren Bereichen führt dazu, dass in den für die Schallentwicklung besonders maßgeblichen radial äußeren Bereichen eine erhöhte Schallreduzierung möglich ist. In den für die Schallentwicklung weniger maßgeblichen radial inneren Bereichen kann hingegen die Oberfläche der Statorschaufeln und können folglich auch Reibungsverluste begrenzt werden.

Als besonders vorteilhaft hat sich aber eine geringe oder auch keine Neigung in radial äußersten Schaufelabschnitten erwiesen, insbesondere wenn hierdurch ein vormals stark geneigter Schaufelabschnitt sozusagen wieder umgelenkt wird.

Insbesondere wird eine Verdichterstufe, insbesondere für ein Nebenstromtriebwerk für Luftfahrtzeuge, vorgeschlagen, mit:
- einem um eine Rotationsachse rotierbaren Fan; und
- einer Mehrzahl von in Umfangsrichtung verteilten Statorschaufeln (insbesondere in einem Nebenstromkanal eines Nebenstromtriebwerks), die stromabwärts von dem Fan angeordnet sind,
wobei sich die Statorschaufeln (bevorzugt entlang einer (radialen) Höhenachse) jeweils von einer radial inneren Statornabe zu einem radial äußeren Außengehäuse (zum Beispiel der Verdichterstufe) erstrecken, wobei ein Neigungswinkel einer jeweiligen Statorschaufel (bspw. zu einer radialen Achse und bevorzugt einer lokalen radialen Achse) variabel ist (bspw. entlang der Höhe), und zwar derart, dass die Statorschaufeln in einem Übergangsbereich zum Außengehäuse (oder, mit anderen Worten, in einem an das Außengehäuse angrenzenden (radial äußersten) Schaufelabschnitt) einen Neigungswinkel mit einem Betrag von weniger als 30° aufweisen und, vorzugsweise, in wenigstens einem radial weiter einwärts liegenden Bereich (zum Beispiel in einem radial mittigen oder sich an den Übergangsbereich anschließenden Bereich) einen Neigungswinkel mit einem hiervon abweichenden Betrag (insbesondere einen zumindest abschnittsweise größeren Neigungswinkel).

Insbesondere kann der Neigungswinkel in dem genannten Schaufelabschnitt weniger als 10° oder weniger als 5° betragen. Allgemein können also die Statorschaufeln im Wesentlichen aufrecht in das Außengehäuse übergehen.

Unter dem Neigungswinkel einer Statorschaufel kann der (bevorzugt kleinste) Winkel zwischen der radialen Achse und wahlweise der Schaufelvorderkante, der Schaufelhinterkante, der sogenannten Fädlungsachse (welche in radialer Richtung verläuft und/oder durch den Flächenschwerpunkt einer Mehrzahl von Schaufelquerschnittsflächen) oder einer anderweitig definierten Achse entlang der Statorschaufel verstanden werden. Bei einem aufrechten Verlauf entlang der radialen Achse würde sich also ein Neigungswinkel von 0° ergeben.

Die betrachtete Kante oder Achse der Statorschaufel (gegebenenfalls auch die radiale Achse) kann auch in eine Ebene projiziert werden, welche orthogonal zur Rotationsachse verläuft (d. h. der Neigungswinkel kann innerhalb dieser Ebene definiert sein).

Je nach betrachtetem Abschnitt oder Ort einer Statorschaufel kann bspw. durch ortsabhängige Rotation der radialen Achse um die Längsachse (und/oder Rotationsachse), eine jeweilige diesen Ort oder Abschnitt schneidende (sozusagen lokale) radiale Achse oder kann der Schnittwinkel zwischen einer Tangentialen durch den Ort/Abschnitt und der radialen Achse betrachtet werden.

Die Statorschaufeln können jeweils zwei Schaufelflächen aufweisen, von denen eine auf einer Druckseite und eine auf einer Saugseite liegt. Diese Schaufelflächen können durch die Vorderkante und/oder Hinterkante miteinander verbunden sein.

Die Definition einer Druckseite und Saugseite von Statorschaufeln sind dem Fachmann geläufig. Allgemein kann die Druckseite konkav gewölbt sein und/oder kann die Saugseite konvex gewölbt sein.

Der Neigungswinkel (insbesondere dessen Vorzeichen) kann anhand des Normalenvektors von wenigstens einer der Schaufelflächen definiert sein. Im Folgenden kann insbesondere auf den Normalenvektor der Schaufelfläche auf der Druckseite abgestellt werden.

Ist der Normalenvektor auf der Druckseite in Richtung der Rotornabe gerichtet (bzw. weist auf diese oder allgemein radial einwärts), liegt bevorzugt eine negative Neigung vor. Ist der Normalenvektor auf der Druckseite von der Rotornabe weggerichtet (bzw. weist von dieser weg oder allgemein radial auswärts), liegt bevorzugt eine positive Neigung vor. Bei einem parallelen Verlauf liegt hingegen keine Neigung beziehungsweise eine Neigung von 0° vor.

Je nach einem betrachteten Ort der Statorschaufel und insbesondere der Druckseite können also unterschiedliche ortsabhängige Normalenvektoren betrachtet werden. Entlang einer Statorschaufel-Höhe bzw. der radialen Achse können auch positiv und negativ geneigte Statorschaufelabschnitte vorliegen.

Allgemein kann der Neigungswinkel auch dort als positiv definiert sein, wo die Saugseite (und insbesondere deren Normalenvektor) der Rotornabe zugewandt ist oder in deren Richtung weist. Dann ist die Druckseite (und insbesondere deren Normalenvektor) vorteilhafterweise gegenteilig geneigt und weist von der Rotornabe weg und/oder nach radial außen.

Alternativ kann der Neigungswinkel dort als negativ definiert sein, wo die Druckseite (und insbesondere deren Normalenvektor) der Rotornabe zugewandt ist oder in deren Richtung weist. Dann ist die Saugseite (und insbesondere deren Normalenvektor) vorteilhafterweise gegenteilig geneigt und weist von der Rotornabe weg und/oder nach radial außen.

Gemäß einer Variante erstreckt sich die radiale Achse ausgehend von einem geometrischen (Kreis-) Mittelpunkt der Verdichterstufe, des Nebenstromtriebwerks oder von einem Stator der Verdichterstufe. Dieser Mittelpunkt liegt bevorzugt auf der Rotationsachse, einer Längsachse der Verdichterstufe und/oder einer (Haupt-) Strömungsachse. Der Mittelpunkt kann insbesondere in einer orthogonal zur Längsachse und/oder Strömungsachse verlaufenden Querschnittsebene betrachtet einen geometrischen Mittelpunkt des ringförmigen Außengehäuses und/oder der ringförmigen Statornabe bilden oder, anders ausgedrückt, einen Mittelpunkt um den diese Komponenten bevorzugt kreisringförmig verlaufen und ausgebildet sind.

Allgemein können radiale Achsen in einer geneigten und insbesondere orthogonalen Ebene zur Rotationsachse, Längsachse und/oder Strömungsachse verlaufen und diese Achsen jeweils schneiden bzw. von diesen ausgehen. Eine radiale Richtung kann dabei allgemein von dem Mittelpunkt und/oder der Längsachse und/oder der Strömungsachse nach außen bzw. von diesen weggerichtet sein.

Insbesondere können Ebenen, welche die radialen Achsen enthalten, von der Rotationsachse, Längsachse und/oder Strömungsachse punktuell durchstoßen werden. Sie können diese Achse aber nicht vollständig enthalten. Es handelt sich also bevorzugt nicht um Längsschnittebenen durch die Verdichterstufe, sondern um Querschnittsebenen hiervon, wobei diese Querschnittsebenen bevorzugt, aber nicht zwingend orthogonal zur Längsachse verlaufen müssen.

Der Neigungswinkel kann allgemein in einer die radiale Achse enthaltenen Ebene definiert sein. Bevorzugt ist er in einer Ebene definiert, die die Vorderkante, Hinterkante oder Fädelachse einer jeweiligen Statorschaufel enthält. Falls die Statorschaufeln in Strömungsrichtung betrachtet nach hinten geneigt ist (also angeschrägt ist oder, gemäß der Fachsprache, eine "sweep"-Winkel von mehr als 0° aufweist), kann eine die genannten Kanten oder Achse enthaltene Ebene zur Längsachse geneigt und/oder ebenfalls entsprechend angeschrägt sein. Wie erwähnt, können die Kanten oder kann die Achse alternativ in eine Ebene, die zum Beispiel orthogonal zur Längsachse oder Rotationsachse verläuft, hineinprojiziert werden und kann der Neigungswinkel dann zwischen der radialen Achse und dieser projizierten Kanten oder Achse definiert sein.

Allgemein definiert der "sweep"-Winkel einen Winkel von insbesondere der Vorderkante einer Statorschaufel zur (Triebwerks-) Längsachse oder liegt zumindest in einer die Längsachse enthaltenen Ebene. Es handelt sich somit nicht um einen Winkel zur radialen Achsen, zumindest nicht in quer zur Längsachse verlaufenden Ebenen, wie der vorliegend betrachtete Neigungswinkel (in der Fachsprache auch als "Iean"-Winkel bezeichnet).

Der Begriff Neigungswinkel wird hierin in Bezug auf Statorschaufeln in fachüblicherweise verwendet und wird vom Fachmann auch in der hierin geschilderten Weise verstanden. Insbesondere wird dieser Begriff vom Fachmann, wie im Zusammenhang mit den nachstehenden Figuren geschildert, verwendet und auf diese Figuren entsprechend gelesen.

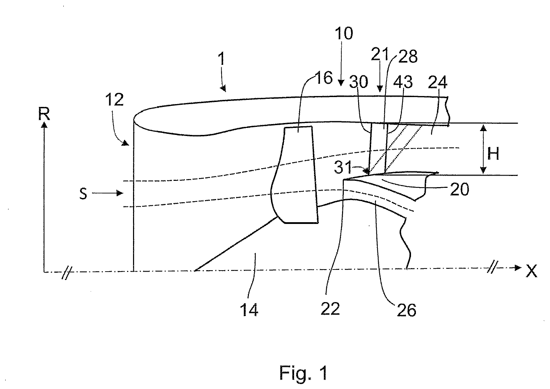

Es wird verwiesen auf die entsprechenden Winkelbezeichnungen und -definitionen in "Design Selection and Analysis of a Swept and Leaned Stator Concept"; Envia, E. und Nallasamy, M., Journal of Sound and Vibration 228.4, S. 793-836 (1999), sh. dort insbesondere Figur 1.

Bevorzugt wird der Neigungswinkel als lokale oder ortsabhängige Größe definiert. Der lokale Neigungswinkel ergibt sich zwischen der Tangente zur definierten Bezugsachse (z.B. Vorder- oder Hinterkante oder der Fädlungsachse) und einer radialen Achse. Diese radiale Achse kann z.B. derart um die Längsachse rotiert werden, dass sie die Bezugsachse jeweils in dem lokalen Ort schneidet, für den der Neigungswinkel ermittelt werden soll. Anders gesagt wird die radiale Achse derart ausgerichtet, dass sie durch den Mittelpunkt des zumeist rund ausgeführten Stators und dem Ort auf der Bezugsachse des Stators verläuft, für den der lokale Neigungswinkel ermittelt werden soll. Je Ort kann also eine eigens ausgerichtete (lokale) radiale Achse betrachtet werden.

Zusammengefasst kann der Neigungswinkel in einer Ebene definiert sein (insbesondere in einer aufrechten oder geneigten Querschnittsebene), die von der Rotationsachse, Längsachse und/oder Strömungsachse lediglich punktuell durchstoßen wird und/oder die keinen Längsschnitt durch die Verdichterstufe definiert.

Die Statorschaufel kann erfindungsgemäß variabel gekrümmt sein und/oder Neigungswinkel mit variablen Beträgen aufweisen. Die genannten Variabilitäten können dabei ortsbezogen verstanden werden können, und zwar bevorzugt bezogen auf Orte entlang einer Vorderkante, Hinterkante oder Fädelachse einer jeweiligen Statorschaufel und/oder Orte entlang einer Höhenachse der Statorschaufel und/oder in radialer Richtung aufeinanderfolgende Orte der Statorschaufel.

Es können also örtliche variierende Krümmungen und/oder Neigungen vorliegen. Insbesondere im Vergleich zwischen radial äußeren (bevorzugt stark gekrümmten und/oder geneigten) Orten und radial inneren (bevorzugt weniger stark gekrümmten und/oder geneigten) Orten können diese Variationen auftreten, wobei aber im radial äußersten und/oder radial innersten Bereich, also an den Übergängen zu den Kanalwänden, bevorzugt nur eine geringe oder auch gar keine Krümmung vorliegt.

Es wurde erkannt, dass vor allem letzteres Merkmals eine besonders vorteilhafte Lösung der eingangs gestellten Aufgabe ermöglicht, insbesondere da damit Schallentwicklungen signifikant begrenzt werden können.

Alternativ formuliert kann also die Statorschaufel entlang ihrer Vorderkante und/oder ihrer Höhe und/oder in radialer Richtung verschiedenartige Winkel, Krümmungen und/oder Abstände der genannten Art aufweisen. Hierdurch ergeben sich die gegenüber dem geschilderten Stand der Technik mit konstantem Neigungswinkel zusätzliche Freiheitsgrade und somit Möglichkeiten zur lokal vorteilhaften Ausbildung der Statorschaufeln hinsichtlich Wirkungsgrad und Schallminderung.

Eine Weiterbildung sieht vor, dass ein Betrag des Neigungswinkels ausgehend von der Statornabe und hin zu dem Außengehäuse zumindest abschnittsweise zunimmt. Insbesondere kann ab einem Abschnitt (z.B. frühestens ab der Hälfte oder frühestens ab zwei Dritteln der (radialen) Höhe) eine Neigungs-Zunahme gegenüber einem vorigem radial inneren Abschnitt vorliegen. Diese Zunahme, die allgemein aus einer zumindest einmaligen Neigungswinkeländerung resultieren kann, kann über eine gewisse Abschnittslänge aufrechterhalten werden, insbesondere (fast) bis zum Erreichen des Außengehäuses und/oder eines radial äußeren Endes der Statorschaufel. Dann kann wiederum eine geringere oder auch gar keine Neigung vorgesehen sein, sodass der allgemein bevorzugte nahezu oder vollständig aufrechte Übergang in das Außengehäuse erfolgt.

Es kann also eine Neigungswinkeländerung vorliegen und genauer gesagt eine Neigungswinkelvergrößerung, wobei dieser vergrößerte Neigungswinkel dann bevorzugt über einen gewissen Abschnitt beibehalten oder zumindest um nicht mehr als 25% wieder reduziert wird, zumindest bis der weniger stark oder auch gar nicht geneigte Abschnitt im Übergangsbereich zum Außengehäuse erreicht wird.

Weiter resultiert dies in einem gering geneigten oder auch aufrechten radial inneren Abschnitt (z.B. zumindest einem radiale inneren Drittel, zumindest einer radial inneren Hälfte oder zumindest radial inneren zwei Dritteln), der in einen stärker geneigten radial äußeren Abschnitt übergeht (z.B. zumindest einem radialen äußeren Drittel, zumindest einer radial äußeren Hälfte oder zumindest radial äußeren zwei Dritteln), welcher dann wiederum in einen weniger stark geneigten oder auch aufrechten radial äußersten Abschnitt oder auch in den entsprechenden Übergangsbereich übergeht. Alternative Definitionen der relativen Größenverhältnisse und insbesondere Höhenverhältnisse dieser Abstände zueinander finden sich nachstehend.

Allgemein kann der radial äußerste Abschnitt und/oder Abschnitt im Übergangsbereich bis zu 5 % der (radialen) Höhe oder auch allgemein radialen Erstreckung der Statorschaufeln einnehmen.

Auf diese Weise kann der für Lärmentwicklung kritische radial äußere Bereich für eine Schallminderung vergleichsweise stark geneigt werden, ohne die Gesamtoberfläche der Statorschaufel und damit einhergehende Reibung entlang der gesamten Höhe zu erhöhen. Der radial innere Bereich kann nämlich weniger stark geneigt sein. Allgemein gilt, dass je stärker die Neigung, desto größer auch eine Länge und somit Oberfläche einer Statorschaufel bzw. eines Abschnitts hiervon. Der wenig geneigte oder auch radial aufrechte Übergang der Statorschaufel zum Außen- und bevorzugt auch Innengehäuse (Statornabe) reduziert die durch die Überlagerung der Grenzschicht des Gehäuses und der Schaufelgrenzschicht entstehenden Wirbelsysteme und demzufolge auch die Wirkungsgradverluste.

Eine Weiterbildung sieht vor, dass ein radialer Abstand zwischen Statornabe und Außengehäuse eine Höhe des Strömungskanals (insbesondere eines Nebenstromkanals) und/oder der Statorschaufeln definiert, wobei die Statorschaufeln jeweils einen radial äußeren Schaufelabschnitt oberhalb der halben Höhe des Strömungskanals aufweisen und einen radial inneren Schaufelabschnitt unterhalb der halben Höhe des Strömungskanals aufweisen; und wobei der Betrag des Neigungswinkels des radial äußeren Schaufelabschnitts zumindest abschnittsweise (zum Beispiel bis zum Erreichen des radial äußersten Abschnitts und/oder Übergangsbereich zum Außengehäuse) größer als der Betrag des Neigungswinkels des radial inneren Schaufelabschnitts ist.

Auch eine Unterteilung in maximal ein Drittel der Höhe für den radial äußeren und maximal zwei Drittel der Höhe für den radial inneren Schaufelabschnitt ist möglich. Bevorzugt nimmt der radial äußere Schaufelabschnitt zwischen 50% und 85% Gesamthöhe ein.

Die genannten Schaufelabschnitte können auch lediglich Orte bzw. Punkte sein. Sie müssen also nicht die gesamte radial äußere und innere Hälfte umfassen, was aber bei der inneren Hälfte optional vorgesehen sein kann. Stattdessen kann es sich um lokale Abschnitte handeln, die entsprechend oberhalb der halben Höhe (zum Beispiel bis zum Erreichen des radial äußersten Abschnitts und/oder das Übergangsbereich) oder unterhalb davon liegen und die verschiedenartige Neigungswinkel aufweisen. Erneut ergeben sich Vorteile dahingehend, dass insbesondere im radial äußeren Bereich gezielt auf Schallentwicklungen reagiert werden kann, ohne aber die insgesamt von den Statorschaufeln erzeugten Reibungsverluste stark zu erhöhen.

Gemäß einer Ausführungsform kann auch vorgesehen sein, dass das Vorzeichen der Neigungswinkel dieser Abschnitte unterschiedlich ist. Insbesondere kann der Neigungswinkel des radial inneren Schaufelabschnitts negativ sein (d. h. entgegen der Betriebsdrehrichtung geneigt sein), wohingegen der des radial äußeren Schaufelabstands positiv sein kann (d. h. in Betriebsdrehrichtung geneigt). Hierdurch kann im radial inneren Bereich der vorstehend geschilderte Druckgradient reduziert werden.

Weiter ist vorgesehen, dass die Statorschaufeln jeweils von radial innen nach radial außen betrachtet einen radial inneren Schaufelabschnitt, einen radial äußeren Schaufelabschnitt und einen
radial äußersten Schaufelabschnitt aufweisen, und die Neigungswinkel der unmittelbar aufeinanderfolgenden Schaufelabschnittte können sich jeweils voneinander unterscheiden (also vom inneren zum äußeren und von äußeren zum äußersten).

In diesem Zusammenhang kann ferner vorgesehen sein, dass die Schaufelabschnitte einen Höhenanteil an der (Gesamt-) Höhe der Statorschaufel einnehmen, und wobei unter der Voraussetzung, dass die Summe der Höhenanteile 100% ergibt, folgendes gilt:
- der Höhenanteil des radial inneren Schaufelabschnitts nimmt zwischen 50% und 85% der Höhe ein;
- der Höhenanteil des radial äußeren Schaufelabschnitts nimmt zwischen 14% und 49% der Höhe ein; und
- der Höhenanteil des radial äußersten Schaufelabschnitts nimmt zwischen 1% und 5% der Höhe ein.

Es wurde festgestellt, dass hierdurch die Aufgabe besonders gut gelöst wird.

Weiter sind folgende Neigungswinkelbeträge u vorgesehen:
- weniger als 30° im radial inneren Schaufelabschnitt sowie
- erfindungsgemäß zwischen einschließlich 40° und einschließlich 70° im radial äußeren Schaufelabschnitt.

Es können folgende Neigungswinkelbeträge und/oder Neigungen in den Schaufelabschnitten vorgesehen sein, allein oder in beliebiger Kombination:
- weniger als 30° im radial inneren Schaufelabschnitt und/oder eine positive oder negative Neigung;
- zwischen einschließlich 40° und einschließlich 70° im radial äußeren Schaufelabschnitts und/oder eine positive Neigung;
- eine Neigung von weniger als 20° im radial äußeren Schaufelabschnitt und/oder eine bevorzugt positive Neigung (falls von 0° verschieden).

Die Neigungswinkel können als Maximalwerte verstanden werden. In den Übergangsbereichen zwischen den verschiedenen Abschnitten der Schaufel und insbesondere auch bei den Übergängen zur Nabe und zum Außengehäuse können die Neigungswinkel kontinuierlich ineinander übergehen. Allgemein können sie innerhalb der genannten Abschnitte einer Variation unterliegen (d.h. nicht über die gesamten Abschnitt konstant sein), die dem Zwecke der Schallreduzierung und Wirkungsgradsteigerung dienen.

Weiter kann vorgesehen sein, dass der (lokale) Neigungswinkel der Statorschaufeln das Vorzeichen mindestens einmal wechselt. Insbesondere kann die Statorschaufel zunächst in eine erste Richtung (zum Beispiel negative Richtung) gegenüber der radialen Achse geneigt sein und dann ab einer gewissen Höhe (zum Beispiel frühestens ab ca. der Hälfte oder zwei Dritteln der Höhe) in die andere Richtung geneigt sein. Allgemein kann die Statorschaufel von radial innen nach radial außen betrachtet erst entgegen der und dann in die Betriebdrehrichtung gekrümmt sein.

Allgemein kann vorgesehen sein, dass ein radial innerer Neigungswinkel gegenüber der radialen Achse ausgehend von der Statornabe zunächst über eine gewisse Höhe aufrechterhalten wird und dann die Neigung in Richtung der Achse verändert wird. Anschließend kann sich der Wert des Neigungswinkels wieder vergrößern und insbesondere größere (positive) Beträge annehmen, als dies als dies in radialen inneren Abschnitten der Fall war. Anschließend können sie sich mit einer bevorzugt stärkeren und positiven Neigung weiter zu dem Übergangsbereich zum Außengehäuse erstrecken, an dem die einleitend erwähnte weniger ausgeprägte Neigung vorgesehen sein kann.

Wie bereits erwähnt, kann der Fan in eine Betriebsdrehrichtung rotierbar sein. Hierbei handelt es sich um eine Drehrichtung, die der Fan im Betrieb der Verdichterstufe zum Erzeugen einer Vorschubkraft oder allgemein einer gewünschten Strömungsrichtung (insbesondere einer Einsaugrichtung) aufweist und für die die Verdichterstufe allgemein konstruktiv ausgelegt ist. Der Fachmann kann eine solche Betriebsdrehrichtung auch bei stehendem Fan und inaktivem Zustand der Verdichterstufe problemlos erkennen, insbesondere an einer Form der Schaufeln des Fans.

In diesem Zusammenhang kann ferner vorgesehen sein, dass die Statorschaufeln ausgehend von oder nahe der Statornabe (und/oder in radial inneren Bereichen unterhalb einer halben Höhe) jeweils zunächst entgegen der Betriebsdrehrichtung geneigt sind. Dies kann mit negativen Neigungswinkeln der vorstehend erläuterten Art einhergehen und/oder in solchen resultieren.

Zusätzlich oder alternativ kann vorgesehen sein, dass die Statorschaufeln im Übergangsbereich zum Außengehäuse (und/oder in radial äußeren Bereichen oberhalb einer halben Höhe) jeweils in Richtung der Betriebsdrehrichtung geneigt sind. Dies kann mit positiven Neigungswinkeln der vorstehend erläuterten Art einhergehen und/oder in solchen resultieren. Erfindungsgemäß kann eine solche Neigung aber auch ausbleiben. Gemäß einer Weiterbildung sind die Statorschaufeln jeweils zumindest abschnittsweise im Wesentlichen ungekrümmt, insbesondere nahe der Statornabe und/oder in radial inneren Bereichen unterhalb einer halben Höhe. Anders ausgedrückt können sich die Statorschaufeln zumindest abschnittsweise gerade erstrecken. Hierbei kann es sich insbesondere um radial innere Abschnitte handeln, die dann in einen stärker geneigten radial äußeren Abschnitt übergehen. In einem radial äußersten Abschnitt kann aber bevorzugt wieder weniger stark oder auch gar nicht geneigt werden. Spätestens ab und/oder zumindest in dem Übergangsbereich zum radial äußeren Abschnitt, der bevorzugt auf frühesten halber oder frühestens zwei Drittel der Höhe liegt, kann dann eine Krümmung vorliegen. Auch in einem Übergangsbereich zum radial äußersten Abschnitt kann eine Krümmung, dann bevorzugt in anderer Richtung, vorliegen.

Ein Abschnitt kann dann als im Wesentlichen ungekrümmt angesehen werden, wenn dieser weniger als 10 % oder weniger als 5% einer maximalen Krümmung (bzw. Krümmungsradius) der Statorschaufel aufweist.

Das Vorsehen zumindest abschnittsweise ungekrümmter Abschnitte ist fertigungstechnisch günstig und kann insbesondere in Kombination mit einer dennoch möglichen negativen Neigung im radial inneren Bereich eine positive Wirkung auf den aerodynamischen Wirkungsgrad (siehe vorstehend erläuterte Möglichkeit zur Reduzierung eines dortigen Druckgradients).

Hierin erwähnte Krümmungen können sich insbesondere auf eine Vorderkante, der Hinterkante oder der Fädelachse der Statorschaufeln beziehen und/oder auf Krümmung in derselben Ebene wie der Neigungswinkel. Allgemein ausgedrückt kann es sich um Krümmungen in einer Raumebene handeln, die die genannten Kanten oder die genannte Achse einer jeweiligen Statorschaufel umfasst. Anders ausgedrückt kann es sich um Krümmungen entlang einer Höhenachse einer jeweiligen Statorschaufel handeln. Nicht gemeint sein können Verdrehungen oder Verwindungen der gesamten Statorschaufel um deren Höhenachse (zum Beispiel im Sinne einer Tordierung).

Allgemein kann vorgesehen sein, dass eine jede Statorschaufel entlang ihrer Höhe variabel gekrümmt ist (d. h. einen variablen Krümmungsradius aufweist). Im Gegensatz zum Stand der Technik können sich die Statorschaufeln oder zumindest deren Vorderkanten (wahlweise auch die Hinterkante oder die Fädelachse) also nicht ausschließlich gerade erstrecken, sondern können zumindest abschnittsweise oder lokal gekrümmt sein. Insbesondere kann vorgesehen sein, dass eine jeweilige Krümmung der Statorschaufeln von radial innen nach radial außen zumindest abschnittsweise zunimmt. Eine Änderung des Krümmungsradius kann insbesondere unmittelbar vor einem radial äußersten Abschnitt und/oder Übergangsbereich zum Außengehäuse vorliegen, insbesondere in der Form, dass der entsprechende Übergangsbereich der Statorschaufeln bzw. deren radial äußerster Abschnitt dann einen anderen und allgemein weniger starken Neigungswinkel aufweist.

Die Erfindung betrifft auch ein Strahltriebwerk gemäß Anspruch 9.

Im Folgenden werden Ausführungsformen der Erfindung anhand der beigefügten schematischen Figuren erläutert. In Ihrer Art und/oder Funktion übereinstimmende Merkmale können dabei figurenübergreifend mit den gleichen Bezugszeichen versehen sein.
- Fig. 1: zeigt einen Teilausschnitt eines Nebenstromtriebwerks mit einer Verdichterstufe gemäß einer ersten Ausführungsform;
- Fig. 2: zeigt eine Teilansicht eines Stators des Nebenstromtriebwerks aus Figur 1;
- Fig. 3: zeigt eine Teilansicht eines Stators gemäß einer zweiten Ausführungsform;
- Fig. 4-5: zeigen Frontansichten von Statoren gemäß dem Stand der Technik.

In Figur 1 ist ein Teilausschnitt eines Strahltriebwerks in Form eines Nebenstromtriebwerks 1 gezeigt, wie es aus dem Stand der Technik allgemein bekannt ist. Allerdings sind die nachfolgend erläuterten Statorschaufeln 28 gemäß einer Ausführungsform der Erfindung ausgebildet. Das Nebenstromtriebwerk 1 umfasst eine Verdichterstufe 10 mit dem nachfolgend erläuterten Fan 14 und dem Stator 21 samt dazugehöriger Komponenten (insbesondere der Statorschaufeln 28).

Es handelt sich bei der gezeigten Ansicht um eine Teilschnittansicht, die eine Längsachse enthält, welche auch eine Hauptströmungsachse definiert, entlang derer Luft durch das Triebwerk strömt. Zudem definiert die Längsachse auch eine Rotationsachse X bzw. entspricht dieser, um die der nachfolgend erläuterte Rotor, der hierin als Fan 14 bezeichnet wird, der Verdichterstufe 10 rotiert.

Die Strömungsrichtung S der Luft durch das Nebenstromtriebwerk 1 ist ebenfalls angedeutet und verläuft allgemein von links nach rechts. Die Luft wird in an sich bekannter Weise an einem in Figur 1 links positionierten Eintrittsbereich 12 durch Rotation des Fans 14 eingesaugt.

Der Fan 14 umfasst mehrere in Umfangsrichtung um die Längsachse verteilte Fanschaufeln 16, von denen lediglich eine erkennbar ist. Die Fanschaufeln 16 erstrecken sich bis nahezu zur Innenwand eines Außengehäuses 18.

Der Fan 14 ist in an sich bekannter Weise mit weiteren Triebwerksstufen verbunden, wie zum Beispiel einer Brennkammer und einer Turbine, die in Figur 1 aber nicht gesondert dargestellt sind. Diese Bestandteile eines Nebenstromtriebwerks 1 sind dem Fachmann geläufig und werden daher nicht näher erläutert.

Wenn die Verdichterstufe 10 nicht in einem Triebwerk 1, sondern z.B. in einem Lüfter zum Einsatz kommt, können auch keine Verdichterstufe 10 nachgelagerten Komponenten vorhanden sein oder lediglich Komponenten, die per erzeugten Luftstrom gekühlt werden sollen.

Das Außengehäuse 18 kann prinzipiell auch dem Stator 21 zugeordnet werden, da es feststehend ist.

Die Statornabe 20 weist eine ringförmig um die Längsachse L verlaufende Vorderlippe 22 auf (auch Splitter genannt), welche die Luftströmung in einen radial äußeren und einen radial inneren Anteil aufteilt.

Der radial äußere Anteil strömt durch einen Nebenstromkanal 24, der zwischen einer Außenseite der Statornabe 20 und einer Innenseite des Außengehäuses 18 verläuft bzw. hiervon eingeschlossen wird. Der Nebenstromkanal 24 ist bevorzugt ein ringförmiger Hohlraum.

Der radial innere Strömungsanteil, der auch als Kernströmung bezeichnet werden kann, strömt hingegen durch einen sich radial einwärts erstreckenden Kanal 26 zu einem sogenannten Kerntriebwerk (nicht gezeigt), welches die vorstehend erwähnten weiteren Komponenten des Nebenstromtriebwerks 1 umfassen kann.

Innerhalb des Nebenstromkanals 24 und in dem gezeigten Beispiel nahe der Vorderlippe 22 befindet sich eine Mehrzahl von Umfangsrichtung verteilter Statorschaufeln 28, von denen in Figur 1 lediglich eine erkennbar ist. Die Statorschaufeln 28 weisen eine dem Fan 14 bzw. Eintrittsbereich 12 zugewandte Vorderkante 30 auf und eine gegenüberliegende Hinterkante 43. Sie erstrecken sich zwischen einem radial inneren Übergangsbereich 33 zum Stator 20, der auch einen radialen inneren Fußpunkt 31 oder auch eine Wurzel der Statorschaufel 28 umfasst, zu einem radial äußeren Übergangsbereich 36 zum Außengehäuse 18. Dieser radial äußere Übergangsbereich 36 kann einen radial äußersten Abschnitt der Statorschaufeln 28 bilden oder umfassen.

Eine Höhe H der Statorschaufeln 28 ist in Figur 1 ebenfalls markiert. Die Höhenachse H erstreckt sich allgemein in radialer Richtung und fällt mit einer Höhe des Nebenstromkanals 24 im Bereich der Statorschaufel 28 zusammen.

Strichliert angedeutet ist auch eine mögliche Anschrägung der Statorschaufel 28 gemäß einem vorstehend erwähnten "sweep"-Winkel, der hierin aber nicht näher betrachtet wird. Dieser Winkel kann befindet sich in einer die Längsachse L enthaltenen Ebene (also in einem Längsschnitt). Der hierin betrachtete Neigungswinkel α verläuft hingegen in einer orthogonal zur Längsachse L verlaufenden (Querschnitts-) Ebene und wird dort mit einer radialen Achse R eingeschlossen, wie sie nachstehend noch näher erläutert wird.

Zunächst Bezug nehmend auf die Figuren 4 und 5 werden im Folgenden Lösungen gemäß dem Stand der Technik erläutert. Die Figuren zeigen Frontansichten eines Stators 21, wie er in einem vergleichbaren Nebenstromtriebwerk 10 zum Einsatz kommen kann. Die Blickrichtung entspricht dem Pfeil S aus Figur 1.

Gezeigt ist also eine Querschnittsebene durch ein Nebenstromtriebwerk 10, welche orthogonal auf der Längsachse L und Rotationsachse X steht bzw. punktuell von diesen durchstoßen wird. Folglich blickt man auf die Vorderkanten 30 der Statorschaufeln 28.

Man erkennt zunächst die bereits erwähnte kreisringförmige Ausbildung des Außengehäuses 18 und der Statornabe 20. Diese erstrecken sich um einen Kreismittelpunkt M. Hiervon ausgehend ist auch eine radiale Achse R gezeigt, die in der erwähnten Querschnittsebene liegt.

Die Statorschaufeln 28 sind mit gleichmäßigen Winkelabständen zueinander in Umfangsrichtung verteilt, was aber nicht zwingend ist. Sie verbinden jeweils das Außengehäuse 18 und den Stator 20 miteinander. Aus Übersichtsgründen sind nur ausgewählte Statorschaufeln 28 samt Vorderkanten 30 mit einem entsprechenden Bezugszeichen versehen.

In den gezeigten Beispielen, welche das fachüblichen Verständnis eines Neigungswinkels α von Statorschaufeln 28 in der Triebwerkstechnik widerspiegeln, wird der Neigungswinkel α jeweils relativ zu einer radialen Achse R definiert, welche ausgehend von dem Kreismittelpunkt M durch einen Fußpunkt 31 bzw. den erwähnten radial inneren Übergangsbereich 33 einer jeden Statorschaufel 28 verläuft. Je Statorschaufel 28 wird also eine eigene radiale Achse R definiert.

Eingeschlossen wird der Neigungswinkel α zwischen und ausgehend von dieser radialen Achse R und der Vorderkante 30. Im Fall einer etwaigen Anschrägung der Statorschaufeln 28, wie in Figur 1 angedeutet und dort erläutert, kann die Vorderkante 30 in die hier betrachtete Querschnittsebene projiziert werden und dann den entsprechenden Neigungswinkel α mit der radialen Achse R einschließen. Auch hierin geschilderte Krümmungen von Statorschaufeln 28 und insbesondere von deren Vorderkanten 30 können in der vorstehend erläuterten Querschnittsebene betrachtet und gegebenenfalls dort hineinprojiziert werden.

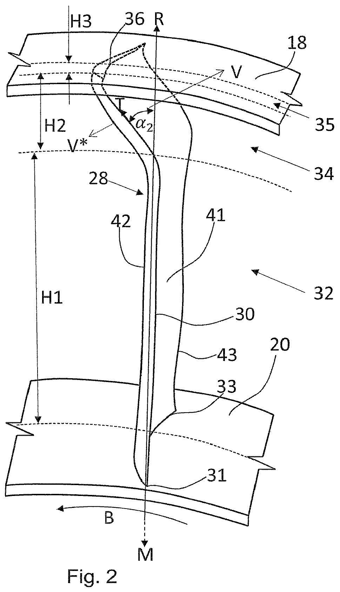

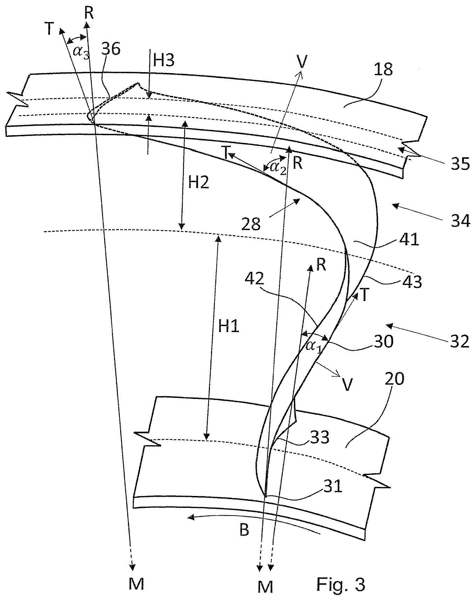

Gezeigt ist ferner eine Betriebsdrehrichtung B des Nebenstromtriebwerks 10 bzw. des vorstehend erläuterten Rotors. In den gezeigten Beispielen ist das Nebenstromtriebwerk 10 rechts drehen. Der Neigungswinkel α wird ausgehend von der radialen Achse R hin zu einer jeweiligen Statorschaufel 28 bzw. Vorderkante 30 definiert. Verläuft der Neigungswinkel αdabei in die Betriebsrichtung B, wie in Figur 5, kann er einen positiven Wert annehmen. Die Statorschaufel 28 ist dann in die Betriebsdrehrichtung B geneigt. Im entgegengesetzten Fall, der nachstehend anhand der Figuren 2 und 3 noch erläutert wird, liegt ein negativer Neigungswinkel α und eine Neigung entgegen der Betriebsdrehrichtung B vor. Bevorzugt wird hierin aber eine Vorzeichendefinition des Neigungswinkels α anhand von Normalenvektoren V, was anhand der Figuren 2 und 3 nachstehend noch erläutert wird.

Sämtliche vorstehenden allgemeinen Ausführungen treffen auch auf die erfindungsgemäßen Ausführungsformen der Figuren 2 und 3 zu.

In Figur 4 ist der Fall nicht geneigter Statorschaufeln 28 gezeigt, bei denen der Neigungswinkel α einen Wert von 0° annimmt.

Im Fall von Figur 5 sind die Statorschaufeln 28 allgemein gleichartig geneigt und zwar mit einem positiven Neigungswinkel α. Für jeden Ort der Statorschaufel 28 entlang der Vorderkante 30 ist dieser Neigungswinkel α gleich. Anders ausgedrückt liegt also eine konstante Neigung oder, anders ausgedrückt, liegt ein konstanter Neigungswinkel α vor, insbesondere bezogen auf bzw. entlang einer Höhe H einer jeweiligen Statorschaufel 28 . Die Statorschaufeln 28 und genauer gesagt deren Vorderkanten 30 (oder die gewählte Bezugsachse, die z.B. die Hinterkante 43 oder Fädelachse sein können) verlaufen allgemein gradlinig und ungekrümmt.

In den Figuren 2 und 3 sind erfindungsgemäße Varianten mit entlang der Höhe H variabel geneigten und auch variabel gekrümmten Statorschaufeln 28 gemäß Ausführungsbeispielen der Erfindung gezeigt. Dabei sind jeweils lediglich Teilansichten mit einer einzelnen Statorschaufel 28 gezeigt, wobei jedoch die weiteren Statorschaufeln 28 analog zu den Figuren 4 und 5 in Umfangsrichtung verteilt und gleichartig ausgebildet sind.

Zunächst Bezug nehmend auf Figur 2 erkennt man eine konkav gewölbte Druckseite 41 und eine konvex gewölbte Saugseite 42, wobei die Druckseite 41 bezugnehmend auf die Betriebsdrehrichtung B der Saugseite 42 nacheilt.

Ein radial innerer Schaufelabschnitt 32 weist zunächst einen Neigungswinkel α von 0° auf und verläuft somit aufrecht. Dieser Neigungswinkel α wird über eine Höhe H1 aufrechterhalten, welche zwischen 50 % und 85 % der gesamten Höhe H der Statorschaufel 28 einnimmt. Der radial innere Schaufelabschnitt 32 zeichnet sich also durch einen konstanten Neigungswinkel von 0° aus, könnte aber auch eine variable negative Neigung mit einem Winkel von weniger als 30° aufweisen. Der innere Schaufelabschnitt 32 verläuft ferner gerade und ungekrümmt radial nach außen.

An den inneren Schaufelabschnitt 32 schließt sich ein radial äußerer Schaufelabschnitt 34 an, der sich in Richtung des Außengehäuses 18 erstreckt. Dieser äußere Schaufelabschnitt 34 weist eine geringere Höhe H2 auf, welche den verbleibenden Anteil (zum Beispiel zwischen 14% und 49%) der Gesamthöhe H einnimmt, abzüglich der nachfolgend erläuterten Höhe H3 eines radial äußersten Abschnitts 35 der Statorschaufel 28. Beispielsweise kann der äußere Schaufelabschnitt 34 zwischen 49% und 14% der Gesamthöhe H einnehmen, insbesondere wenn die Höhe H3 einen Anteil von 1 % einnimmt. Allgemein kann die Höhe H3 aber bis zu 5 % einnehmen (die Höhe H2 beträgt dann vorzugsweise zwischen 45 % und 10% der Gesamthöhe). Die Summe der Höhenanteile H1-H3 entspricht stets der Gesamthöhe H.

Der äußere Schaufelabschnitt 34 verläuft allgemein gekrümmt und somit stärker gekrümmt als der aufrechte radial innere Schaufelabschnitt 32. Ferner nimmt Neigungswinkel α dieses Schaufelabschnitts 34 gegenüber dem inneren Schaufelabschnitt 32 zu, bevorzugt um das wenigstens 1,3-fache, falls der innere Schaufelabschnitt 32 zumindest geringfügig geneigt sein sollte. In jedem Fall weist der Schaufelabschnitt 34 aber einen von 0° verschiedenen Wert und zum Beispiel einen Wert von einschließlich 40° bis zu einschließlich 70° auf.

Gezeigt ist ferner ein Normalenvektor V des äußeren Schaufelabschnitts 34. Dieser ist vorliegend in Bezug auf die Druckseite 41 definiert und steht orthogonal auf dieser. Er weist von der Rotornarbe 20 weg oder, mit anderen Worten, ist nach radial außen gerichtet, d. h. die Druckseite 41 ist nach radial außen geneigt. Dies wird vorliegend als eine positive Neigung des entsprechenden Schaufelabschnitts 34 definiert.

Angedeutet ist auch ein Normalenvektor V* auf der Saugseite 42 im selben Bereich des äußeren Schaufelabschnitts 34. Dieser weist radial nach innen bzw. ist auf die Nabe 20 gerichtet. Insofern entspricht eine positive Neigung auch einer negativen Neigung der Saugseite 42 zur Nabe 20 bzw. geht mit einer solchen einher.

Der radial äußere Schaufelabschnitt 34 ist somit stärker gekrümmt und gebogen, als der radial innere Schaufelabschnitt 32. Es liegt also radial äußere bewusst starke Krümmung und Biegung vor, bevorzugt in die Betriebsdrehrichtung B. Hierdurch werden die vorstehend erwähnten Vorteile einer stärkeren Schallminderung in radial äußeren Bereichen erzielt. Durch eine vergleichsweise geringe Neigung in radial inneren Bereichen wird eine Länge der Vorderkante 30 und somit auch eine Gesamtoberfläche der Statorschaufeln 28 hingegen zum Begrenzen von Reibungsverlusten bewusst reduziert.

Der radial äußerste Schaufelabschnitt 35, der sich an den radial äußeren Abstand 34 mit starker Neigung anschließt und der den Übergangsbereich 36 zum Außengehäuse 18 bildet bzw. in diesen übergeht, weist hingegen wiederum nur eine geringe Neigung auf. Ein dortiger Neigungswinkel α₃ kann allgemein zwischen 0° und maximal 30° betragen. Dieser Neigungswinkel α kann als (vorzugsweise kleinster) Schnittwinkel zwischen einer Tangentialen T entlang der Vorderkante 30 in diesem Schaufelabschnitt 35 und der radialen Achse R definiert sein.

Allgemein sind die Statorschaufeln 28 aus Figur 2 (aber auch der nachstehenden Figur 3) somit entlang ihrer Höhe H variabel gekrümmt und variabel geneigt.

Es ist prinzipiell und insbesondere bei der Variante aus Figur 2 auch möglich, in radial inneren Bereichen und insbesondere unmittelbar ausgehend vom Fußpunkt 31 zunächst einen negativen Neigungswinkel α vorzusehen. Dies hilft beim Abbau des vorstehend erläuterten Druckgradients. Dieser Neigungswinkel α kann dann zunehmen und in eine positive Neigung übergehen, wie dies nachstehend anhand von Figur 3 erläutert wird. Der Vorzeichenwechsel der Neigung liegt insbesondere bei der Variante aus Figur 2 bevorzugt in einer oberen Hälfte der Höhe H.

In Figur 3 ist eine weitere erfindungsgemäße Ausführungsform gezeigt. Aus dieser wird auch die hierin bevorzugte lokale Definition eines Neigungswinkels α ersichtlich. Für jeden betrachteten Ort wird der Neigungswinkel α als (kleinster) Schnittwinkel einer Bezugsachse (vorliegend der Vorderkante 30) und genauer gesagt einer Tangentialen T an den Ort auf dieser Bezugsachse mit einer radialen Achse R bestimmt. Die radiale Achse R verläuft durch einen Mittelpunkt M. Letzterer liegt auf der Längsachse bzw. Rotationsachse X. Anders ausgedrückt wird also der Neigungswinkel zu einer radialen Achse R bestimmt, wobei die radiale Achse R je nach dem betrachteten Ort variiert bzw. bei einem Wechsel von einem Ort zum nächsten um die Rotationsachse X verdreht wird.

Die Statorschaufeln 28 sind ausgehend von ihrem radial inneren Fußpunkt 31 dabei zunächst entgegen der Betriebsdrehrichtung B geneigt. Genauer gesagt weist der Normalenvektor V der Druckseite 41 in Richtung der Statornabe 20. Wie erwähnt, wird der Neigungswinkel α1 wird beispielhaft mittels einer Tangentialen T ermittelt (eingetragen für einen beispielhaften radial inneren Punkt bzw. Bereich), und zwar als kleinster Schnittwinkel zwischen dieser Tangentialen T und einer lokalen bzw. ortsspezifische radialen Achse R. Der negative Neigungswinkel α1 wird über einen radiale inneren Abschnitt 32 zunächst im Wesentlichen aufrechterhalten bzw. nur durch geringe lokale Krümmungen um nicht mehr als 10 % verändert. Die Höhe H1 des radial inneren Abschnitts nimmt dabei zwischen 50% und 85 % der Höhe H ein.

Anschließend ändert sich eine Krümmungsrichtung der Statorschaufel 28 (bzw. von dessen Vorderkante 30) innerhalb des inneren Abschnitts 32. Die Statorschaufel 28 ist in Betriebsdrehrichtung B gekrümmt und nicht mehr entgegen hierzu, wie im vorangehenden Bereich. Der Betrag des dortigen Neigungswinkels α2 kann größer als derjenige des vorangehenden radial weitere inneren ersten Neigungswinkels α1 sein. Er kann auch positiv sein, da der Normalenvektor V zunehmend von der Statornabe weggerichtet verläuft. Im Übergangsbereich zwischen dem Neigungswinkel α1 und α2 bei der Höhe H1 weist die Schaufel lokal keine Neigung auf.

Ein anschließender radial äußerer Schaufelabschnitt 34 erstreckt sich über einen Höhenanteil H2, der geringer als der Höhenanteil H1 sein kann und/oder der zum Beispiel maximal ein Drittel der Gesamthöhe H beträgt (bevorzugt zwischen 49% und 14% von H, je nach nachstehendem Anteil H3). Dort weist die Statorschaufel 28 einen positiven Neigungswinkel α₂ auf, dessen Wert größer als derjenige des vorangehenden Neigungswinkels α₁ sein kann (der z.B. weniger als 30° betragen kann) und zum Beispiel wenigstens das 1,2-fache oder wenigstens das doppelte von deren Wert aufweisen kann. Der Neigungswinkel α₂ und/oder die Krümmung in Betriebsdrehrichtung B kann bis zum radial äußersten Bereich 35 aufrechterhalten und/oder um nicht mehr als 10% variiert werden, wobei beim Übergang zu dem äußersten Bereich 35 und inneren Bereich 32 der Neigungswinkel α₂ kontinuierlich in die Neigungswinkel α₁, α₃ dieser benachbarten Bereiche 32, 35 überführt wird. Der Neigungswinkel α₂ kann z.B. zwischen einschließlich 40° bis einschließlich 70° betragen.

Der radial äußerste Bereich 35 umfasst dann wieder einen Höhenanteil H3 von zwischen z.B. 1 % und 5% und ist nicht geneigt oder um weniger als 30 ° geneigt. In jedem Fall ist er geringer als der Abschnitt 34 geneigt.

Mittels dieser Variante kann sowohl der Druckgradient im radial inneren Bereichen gemindert, als auch durch die starke radial äußere Neigung die Schallminderung in radial äußeren Bereichen erhöht werden.

Mit sämtlichen hierin geschilderten beispielhaften Größenverhältnissen und insbesondere Höhenverhältnissen sowie Krümmungs- und Neigungsänderungen wurden geeignete Kompromisse zwischen einer Erhöhung von Reibungsverlusten aufgrund einer vergrößerten Oberfläche und einer Schallminderung erzielt. Beispielsweise haben Simulationen ergeben, dass Schallreduzierungen um mehrere Dezibel mit den gezeigten Lösungen ohne Beeinträchtigung des Wirkungsgrades möglich sind oder aber den Wirkungsgrad um nicht deutlich mehr als ein Prozent verschlechtern (und dann gegebenenfalls auch nur bezogen auf bestimmte Flugphasen).

Je nach Anwendungsfall kann auch in Kauf genommen werden, dass die Reibungsverluste zu einer gewissen Verringerung des erzielbaren Wirkungsgrades führen, sofern dies mit signifikanten Schallreduzierungen einhergeht. Beispielsweise kann es für Flugzeugbetreiber durchaus relevant sein, lärmabhängige Landegebühren zu reduzieren und dafür während eines Flugs auch einen etwas geringeren Wirkungsgrad in Kauf zu nehmen.

Im Rahmen dieser Erfindung wurde zur Definition des Neigungswinkels insbesondere auf eine Vorderkante 30 der Statorschaufeln 28 abgestellt. Alternativ könnte aber ebenso eine Hinterkante, eine Fädelachse oder eine geometrische Mittellinie oder Mittenebene (zum Beispiel eine durch einen Mittelpunkt verlaufende Längsschnittebene) der Statorschaufeln 28 betrachtet werden.

Die Statorschaufeln 28 können auch (gegebenenfalls auch ohne Verwindung um ihre eigene Längsachse) als solche schräg zwischen dem Außengehäuse 18 und der Nabe 20 angeordnet sein. Bezugnehmend auf die Figuren 2 bis 5 können die Statorschaufeln 28 also schräg auf der Blattebene stehen bzw. sich schräg in diese hinein erstrecken. Eine Oberkante der Statorschaufeln 28, die dem Außengehäuse zugewandt ist, kann dann einen Winkel mit der Rotationsachse X einschließen bzw. schräg zu dieser verlaufen.

Eine Höhe H der Statorschaufeln 28 kann allgemein mit einer Höhe des Nebenstromkanals 24 gleichgesetzt werden, wobei die Statorschaufeln 28 aber geneigt zur Höhenachse verlaufen können. Die Höhe kann der Statorschaufeln 28 kann durch den Abstand der radial inneren und äußeren Übergangsbereiche 33, 36 definiert sein bzw. diesem Abstand entsprechen. Aufgrund der Neigung kann eine Länge der Statorschaufeln 28, welche einer Länge der Vorderkante 30 entspricht bzw. entlang der Vorderkante verläuft und gemessen wird, jedoch größer als die Höhe H ausfallen.

## Patentansprüche

1. Verdichterstufe (10), insbesondere für ein Nebenstromtriebwerk für Luftfahrtzeuge, mit:
- einem um eine Rotationsachse (X) rotierbaren Fan (14); und
- einer Mehrzahl von in Umfangsrichtung verteilten Statorschaufeln (28), die stromabwärts von dem Fan (14) angeordnet sind,
wobei sich die Statorschaufeln (28) jeweils von einer radial inneren Statornabe (20) zu einem radial äußeren Außengehäuse (18) erstrecken,
wobei ein Neigungswinkel (α), der ein Lean-Winkel ist, einer jeweiligen Statorschaufel (28) variabel ist,
wobei die Statorschaufeln (28) jeweils in einem an das Außengehäuse (18) angrenzenden Schaufelabschnitt (35) einen Neigungswinkel (α) mit einem Betrag von weniger als 30° aufweisen und in wenigstens einem radial weiter einwärts liegenden Bereich einen Neigungswinkel (α) mit einem hiervon abweichenden Betrag,
wobei die Statorschaufeln (28) jeweils von radial innen nach radial außen betrachtet einen radial inneren Schaufelabschnitt (32), einen radial äußeren Schaufelabschnitt (34) und den an das Außengehäuse (18) angrenzenden radial äußersten Schaufelabschnitt (35) aufweisen, und wobei die Neigungswinkel (α) der unmittelbar aufeinanderfolgenden Schaufelabschnittte (32, 34, 35) sich jeweils voneinander unterscheiden, und zwar in der Weise, dass der radial äußere Schaufelabschnitt (34) stärker gegenüber dem radial inneren Schaufelabschnitt (32) geneigt ist und der radial äußerste Schaufelabschnitt (35) weniger stark als der radial äußere Schaufelabschnitt (34) geneigt ist,
wobei in dem radial inneren Schaufelabschnitt (32) ein Neigungswinkel (α) mit einem Betrag von weniger als 30° vorgesehen ist,
**dadurch gekennzeichnet, dass**
in dem radial äußeren Schaufelabschnitt (34) ein Neigungswinkel (α) mit einem Betrag zwischen einschließlich 40° und einschließlich 70° vorgesehen ist.

2. Verdichterstufe (10) nach Anspruch 1,
wobei ein Betrag des Neigungswinkels (α) ausgehend von der Statornabe (20) und hin zu dem Außengehäuse (18) zumindest abschnittsweise zunimmt.

3. Verdichterstufe (10) nach Anspruch 1 oder 2,
wobei ein radialer Abstand zwischen Statornabe (20) und Außengehäuse (18) eine Höhe (H) eines Strömungskanals (24) definieren,
wobei die Statorschaufeln (28) jeweils einen radial äußeren Schaufelabschnitt (34) oberhalb der halben Höhe (H) des Strömungskanals (24) aufweisen und einen radial inneren Schaufelabschnitt (32) unterhalb der halben Höhe (H) des Strömungskanals (24) aufweisen; und
wobei der Betrag des Neigungswinkels (α) des radial äußeren Schaufelabschnitts (34) zumindest abschnittsweise größer als der Betrag des Neigungswinkels (α) des radial inneren Schaufelabschnitts (32) ist.

4. Verdichterstufe (10) nach einem der vorangehenden Ansprüche,
wobei die Schaufelabschnittte (32, 34, 35) jeweils einen Höhenanteil (H1, H2, H3) an der Höhe (H) der Statorschaufel (28) einnehmen, und wobei unter der Voraussetzung, dass die Summe der Höhenanteile (H1, H2, H3) 100% ergibt, folgendes gilt:
- der Höhenanteil (H1) des radial inneren Schaufelabschnitts (32) nimmt zwischen 50% und 85% der Höhe (H) ein;
- der Höhenanteil (H2) des radial äußeren Schaufelabschnitts (34) nimmt zwischen 14% und 49% der Höhe (H) ein; und
- der Höhenanteil (H3) des radial äußersten Schaufelabschnitts (35) nimmt zwischen 1% und 5% der Höhe (H) ein.

5. Verdichterstufe (10) nach einem der vorangehenden Ansprüche,
wobei ein Vorzeichen des Neigungswinkels (α) entlang der Höhe (H) einer jeden Statorschaufel (28) wenigstens einmal wechselt.

6. Verdichterstufe (10) nach einem der vorangehenden Ansprüche,
wobei der Fan (14) in eine Betriebsdrehrichtung (B) rotierbar ist und wobei die Statorschaufeln (28) ausgehend von der Statornabe (20) jeweils zunächst entgegen der Betriebsdrehrichtung (B) gekrümmt und/oder geneigt sind.

7. Verdichterstufe (10) Anspruch 6,
wobei die Statorschaufeln (28) im Übergangsbereich (33) zum Außengehäuse (18) jeweils in Richtung der Betriebsdrehrichtung (B) gekrümmt und/oder geneigt sind.

8. Verdichterstufe (10) nach einem der vorangehenden Ansprüche,
wobei die Statorschaufeln (28) zumindest abschnittsweise im Wesentlichen ungekrümmt sind, insbesondere nahe der Statornabe (20) und/oder nahe des Außengehäuses (18).

9. Strahltriebwerk (1), umfassend eine Verdichterstufe (10) nach einem der vorangehenden Ansprüche.

## Claims

1. A compressor stage (10), in particular for a bypass flow engine for aircraft, comprising:
- a fan (14) rotatable about a rotation axis (X); and
- a plurality of stator blades (28), which are distributed in the peripheral direction and are arranged downstream of the fan (14),
wherein the stator blades (28) each extend from a radially inner stator hub (200) to a radially outer external housing (18),
wherein an angle of inclination (α), which is a lean angle, of a respective stator blade (28) is variable,
wherein the stator blades (28), in each case in a blade portion (35) bordering the external housing (18), have an angle of inclination (α) with a value of less than 30° and, in at least one radially further inwardly located region, have an angle of inclination (α) with a value differing therefrom,
wherein the stator blades (28), in each case viewed from radially inwards to radially outwards, have a radially inner blade portion (32), a radially outer blade portion (34) and the radially outermost blade portion (35) bordering the external housing (18), and wherein the angle of inclinations (α) of the directly successive blade portions (32, 34, 35) each differ from one another, specifically in such a way that the radially outer blade portion (34) is inclined to a greater extent compared to the radially inner blade portion (32) and the radially outermost blade portion (35) is inclined to a lesser extent than the radially outer blade portion (34),
wherein, in the radially inner blade portion (32), there is provided an angle of inclination (α) with a value of less than 30°,
**characterised in that**
in the radially outer blade portion (34) there is provided an angle of inclination (α) with a value of between 40° and 70°, both inclusive.

2. The compressor stage (10) according to claim 1,
wherein the value of the angle of inclination (α) starting from the stator hub (20) and towards the external housing (18) increases at least in portions.

3. The compressor stage (10) according to claim 1 or 2,
wherein a radial distance between stator hub (20) and external housing (18) defines the height (H) of a flow duct (24),
wherein the stator blades (28) each have a radially outer blade portion (34) above half the height (H) of the flow duct (24) and a radially inner blade portion (32) below half the height (H) of the flow duct (24); and
wherein the value of the angle of inclination (α) of the radially outer blade portion (34) is, at least in portions, greater than the value of the angle of inclination (α) of the radially inner blade portion (32).

4. The compressor stage (10) according to any one of the preceding claims, wherein the blade portions (32, 34, 35) each account for a height portion (H1, H2, H3) of the height (H) of the stator blade (28), and wherein, on the proviso that the sum of the height portions (H1, H2, H3) gives 100%, the following applies:
- the height portion (H1) of the radially inner blade portion (32) accounts for between 50% and 85% of the height (H);
- the height portion (H2) of the radially outer blade portion (34) accounts for between 14% and 49% of the height (H); and
- the height portion (H3) of the radially outermost blade portion (35) accounts for between 1 % and 5% of the height (H).

5. The compressor stage (10) according to any one of the preceding claims, wherein the sign of the angle of inclination (α) changes at least once over the height (H) of each stator blade (28).

6. The compressor stage (10) according to any one of the preceding claims, wherein the fan (14) is rotatable in an operating rotational direction (B), and wherein the stator blades (28) are each curved and/or inclined initially against the operating rotational direction (B) starting from the stator hub (20).

7. The compressor stage (10) according to claim 6,
wherein the stator blades (28), in the transition region (33) to the external housing (18), are in each case curved and/or inclined in the direction of the operating rotational direction (B).

8. The compressor stage (10) according to any one of the preceding claims, wherein the stator blades (28) are substantially uncurved at least in portions, in particular in the vicinity of the stator hub (20) and/or in the vicinity of the external housing (18).

9. A jet engine (1) comprising a compressor stage (10) according to any one of the preceding claims.

## Revendications

1. Etage de compresseur (10), notamment pour un moteur à flux secondaire, prévu pour des aéronefs, pourvu :
- d'une soufflante (14) orientable en rotation autour d'un axe de rotation (X) ; et
- d'une multiplicité d'aubes de stator (28) réparties en direction circonférentielle qui sont disposées en aval par rapport à la soufflante (14),
dans lequel les aubes de stator (28) s'étendent respectivement à partir d'un moyeu de stator (20) radial interne jusqu'à un carter externe (18) extérieur radial,
dans lequel un angle d'inclinaison (α), qui est un angle d'inclinaison d'une aube de stator (28) respective, est variable, dans lequel les aubes de stator (28) présentent respectivement dans un segment d'aube (35) limitrophe avec le carter externe (18) un angle d'inclinaison (α) ayant une valeur inférieure à 30 ° et, dans au moins une zone située radialement ailleurs vers l'intérieur, un angle d'inclinaison (α) d'une valeur en déviant,
dans lequel les aubes de stator (28), en regardant respectivement radialement de l'intérieur vers radialement de l'extérieur, présentent un segment d'aube (32) radial intérieur, un segment d'aube (34) radial extérieur et le segment d'aube (35) radialement le plus à l'extérieur limitrophe avec le carter externe (18), et dans lequel les angles d'inclinaison (α) des segments d'aube (32, 34, 35) successifs immédiats se différentient les uns des autres, et en l'occurrence, de manière à ce que le segment d'aube (34) radial extérieur soit davantage incliné que le segment d'aube (32) radial intérieur et le segment d'aube (35) le plus à l'extérieur radialement est moins incliné que le segment d'aube (34) radial extérieur,
dans lequel un angle d'inclinaison (α) avec une valeur inférieure à 30 ° est prévu dans le segment d'aube (32) radial intérieur,
**caractérisé en ce que**
dans le segment d'aube (34) radial extérieur, il est prévu un angle d'inclinaison (α) avec une valeur entre 40 ° inclus et 70 ° inclus.

2. Etage de compresseur (10) selon la revendication 1,
dans lequel la valeur de l'angle d'inclinaison (α) en partant du moyeu de stator (20) jusqu'au carter externe (18) augmente au moins graduellement.

3. Etage de compresseur (10) selon la revendication 1 ou la revendication 2,
dans lequel une distance radiale entre le moyeu de stator (20) et le carter externe (18) définit une hauteur (H) d'un canal d'écoulement (24),
dans lequel les aubes de stator (28) présentent respectivement un segment d'aube (34) radial extérieur au-dessus de la demie hauteur (H) du canal d'écoulement (24) et un segment d'aube (32) radial intérieur en-dessous de la demie hauteur (H) du canal d'écoulement (24) ; et
dans lequel la valeur de l'angle d'inclinaison (α) du segment d'aube (34) radial extérieur est plus grande au moins par endroits que la valeur de l'angle d'inclinaison (α) du segment d'aube (32) radial intérieur.

4. Etage de compresseur (10) selon l'une des revendications précédentes,
dans lequel les segments d'aube (32, 34, 35) adoptent respectivement une proportion en hauteur (H1, H2, H3) sur la hauteur (H) de l'aube de stator (28), et dans lequel, à condition que la somme des proportions en hauteur (H1, H2, H3) soit égale à 100 %, on constate ce qui suit :
- la proportion en hauteur (H1) du segment d'aube (32) radial intérieur se situe entre 50 % et 80 % de la hauteur (H) ;
- la proportion en hauteur (H2) du segment d'aube (34) radial extérieur se situe entre 14 % et 49 % de la hauteur (H) ; et
- la proportion en hauteur (H3) du segment d'aube (35) radialement le plus à l'extérieur se situe entre 1 % et 5 % de la hauteur (H).

5. Etage de compresseur (10) selon l'une des revendications précédentes,
dans lequel un signe algébrique de l'angle d'inclinaison (α) varie au moins une fois sur la hauteur (H) d'une aube de stator (28) donnée.

6. Etage de compresseur (10) selon l'une des revendications précédentes,
dans lequel la soufflante (14) peut tourner dans une direction de rotation de fonctionnement (B) et dans lequel les aubes de stator (28) en partant du moyeu de stator (20) sont respectivement d'abord courbées et/ou inclinées en sens contraire par rapport à la direction de rotation de fonctionnement (B).

7. Etage de compresseur (10) selon la revendication 6,
dans lequel les aubes de stator (28) dans la zone de transition (33) vers le carter externe (18) sont respectivement courbées et/ou inclinées dans la direction de rotation de fonctionnement (B).

8. Etage de compresseur (10) selon l'une des revendications précédentes,
dans lequel les aubes de stator (28) sont essentiellement non courbées au moins par endroits, en particulier près du moyeu de stator (20) et/ou près du carter externe (18).

9. Moteur à réaction (1) comprenant un étage de compresseur (10) selon l'une des revendications précédentes.
